# EUROPÄISCHE PATENTANMELDUNG

(11) **EP 1 724 868 A1**
(43) Veröffentlichungstag der Anmeldung: **22.11.2006**
(21) Anmeldenummer: 06014807.9
(22) Anmeldetag: 11.04.2002
(51) Int. Cl.: H01M 8/04

(54) **Verfahren zur Regelung eines Brennstoffzellenluftversorgungssystems**

(30) Priorität: 22.04.2001 DE 10120947
(62) Teilanmeldung aus: 02747272.9
(71) Anmelder: DaimlerChrysler AG, 70567 Stuttgart (DE)
(72) Erfinder: Stute, Manfred, 73730 Esslingen (DE); Sumser, Siegfried, 70327 Stuttgart (DE); Finger, Helmut, 70771 Leinfelden-Echterdingen (DE); Fledersbacher, Peter, 70619 Stuttgart (DE); Konrad, Gerhard, Dr., 89081 Ulm (DE); Löffler, Paul, 70199 Stuttgart (DE)

(57) **Zusammenfassung**

Verfahren zur Regelung einer Vorrichtung zur Luftversorgung von Brennstoffzellen mit Kompressoren, wobei ein Strömungsverdichter niederdruckseitig mit einem Elektromotor verbunden ist. Wobei Ferner ein weiterer in Reihe nachgeschalteter Hochdruckverdichter der Strömungsmaschinenbauart mit einer Turbine als Freiläufer fest gekoppelt ist, welche wiederum mit der Austrittsverrohrung der Brennstoffzelle verbunden ist. Nach dem Hochdruckverdichter führt vor der Brennstoffzelle eine Verbindungsleitung zur Austrittsverrohrung der Brennstoffzelle. In diese ist ein regelbares Ventil eingebracht.

Erfindungsgemäß ist, dass der Anfahr-(Startvorgang oder Lastwechselvorgang des Brennstoffzellen-Luftversorgungssystems zumindest teilweise über die elektrische Energiezufuhr aus dem Stromspeicher zum Elektromotor und damit der Leistungszumessung des Niededruckverdichters mittels der Signale erfolgt, und dabei die Einstellungen der Schließ-/Öffnungspositionen des Umblaseventils, bzw. Bypass-Massenstroms der Brennstoffzelle, entsprechend der Signale des Reglers durchgeführt werden.

## Beschreibung

Die Erfindung betrifft ein Verfahren zur Regelung von Brennstoffzellen mit Kompressoren nach dem Oberbegriff des Anspruchs 1.

Gegenüber den herkömmlichen Brennstoffzellen-Luftversorgungssystemen, die mit relativ niedertourigen Verdrängerkompressoren ausgestattet sind, wird erfindungsgemäß eine zweistufige Verdichtung der Luft mittels reiner, sehr hochtouriger Strömungsverdichter vorgeschlagen. Hierbei bietet sich bei Auslegungsgesamtdruckverhältnissen von über 3 an, Strömungsmaschinen einzusetzen, die ein Zentrifugalfeld erzeugen, wie z. B. die Radialverdichter es können, um hohe spezifische Arbeiten pro Bauvolumen zu bewerkstelligen.

Gegenüber den Verdrängerverdichtern mit den hohen Druckpulsationen besteht bei den Strömungsverdichtem aufgrund der sehr großen Drehzahlunterschieden zu hohen Werten hin nicht nur Bauraumvorteile, sondern durch die kontunierliche Durchströmung der Strömungsmaschinen ergeben sich auch sehr gute Bedingungen für einen geräuscharmen und besonders wirkungsgradgünstigen Betrieb.

Da dem Wasserstoffverbrauch der Brennstoffzelle für die effiziente Bewertung der Fahrleistung die gleiche Bedeutung zukommt als dem Kraftstoffverbrauch beim Verbrennungsmotor, wird der Optimierung des Brennstoffzellen-Luftversorgungssystems genau so eine große Bedeutung beigemessen, wie der Optimierung der Ladungswechseleffizienz des Kolbenmotor., Am Gesamtsystemwirkungsgrad der Brennstoffzelle kann das Luftversorgungssystem gut bis zu einem einem Drittel der Gewichtung ausmachen kann.

Wie aus der europäischen Patentanmeldung EP 1 009 053 A1 ersichtlich, wird dort ebenfalls eine zweistufige Aufladung der Brennstoffzelle vorgesehen, doch wird hier auf einen nachteiligen Verdrängerlader abgehoben, der durch einen Elektromotor angetrieben wird. Die Wirkung bezüglich Geräusch und Wirkungsgraddefizit wird offensichtlich nicht berücksichtigt.

Desweiteren wird in dieser Anmeldung die systemwirkungsgradgünstige Zwischenkühlung nicht erwähnt, obwohl dadurch Größenordnungen von bis 20% Wirkungsgradgewinn des Luftversorgungssystems leicht möglich werden.
Der Hinweis zur Abblasung über ein sogenanntes Überdruckventil nach der Hochdruckstufe gibt Anlass, den formulierte Stand der Technik als eine grobe Vorstufe zu deuten. Die positive Wirkung einer regelbaren wirkungsgradbeeinflussenden Umblasung und die entscheidende Bedeutung dieses regelbaren Elementes für den stabilen Betrieb der Brennstoffzelle, in dem es die Gefahr des Verdichterpumpens bei abgesenkten Durchsätzen verhindert, ist wohl nicht erkannt worden.

Die Aufgabe liegt darin ein Verfahren zur Regelung einer Vorrichtung zur Luftversorgung von Brennstoffzellen mit Kompressoren anzugeben, welches wirkungsgradgünstig und in großen Druckspannen stabil betreibbar ist.

Das Thema Anfahren, bzw. Starten der Stromerzeugung der Brennstoffzelle steht unmittelbar mit dem Starten dessen Luftversorgungssystems in Verbindung, die der Anspruch 1 von der Verfahrensseite her betrachtet. Das Hauptmerkmal stellt die Energieeinspeisung zumindest teilweise aus dem Stromspeicher in den Elektromotor des Niederdruckverdichters dar, der das Gesamtsystem damit anschieben kann. Der Freiläufer kommt dann ebenfalls über die in Druckenergie umgewandelte Exergie vor der Turbine und der folgenden Expansion in der Turbine in Gang. Falls eine Varioturbine vorliegt, kann es Sinn machen, den engsten Querschnitt der Turbine in der Anfahrphase zu kleinen Werten hin zu schließen, wodurch der Freiläufer an der indirekten aerodynamisch gekoppelten Energieumwandlung vom Niederdruckverdichter, bzw. Elektromotor stark profitieren kann. Eine anfängliche weite Öffnung des Umblaseventil sorgt ebenfalls für eine schnelle Einbeziehung des Freiläufers in die Energieumwandlungskette, wodurch auch der schnelle Hochlauf des Freiläufers bei nahezu geschlossenem Leitgitter der Turbine eine starke Unterstützung erfährt. Diese Verfahrensschritte des Zusammenspiels zwischen der Energiequelle, bzw. dem Niederdruckverdichter, der Umblaseeinrichtung und der Varioturbine wird sich nicht nur auf die Startphase beschränken, sondern wird in analoger Form bei jedem Lastwechsel der Zelle in mehr oder weniger verstärkter Weise an den betreffenden Stellgliedern bei dem Regelungsvorgang der genannten Komponenten wiederholen. Als wichtigste zeitliche Ergebnisse dieses Reglungsablaufs während der Anlauf- oder der Lastwechselphasen sind die schnelle Erzeugung der optimalen Zustandsdaten wie Druck und Temperatur der Luft, die in den Eintritt der Brennstoffzelle strömt und mit diesem Zustand die chemische Reaktion in der Brennstoffzelle zwischen Wasserstoff und dem Luftsauerstoff optimal unterstützt und dafür mit garantiert, daß die mechanische Haltbarkeit der sensiblen Teile, wie z. B. die Membran, nicht gefährdet werden.

Die Räder des Freiläufers werden schon aus Wirkunggradgründen mit geringern Durchmessern versehen (günstiger Kanalverlauf, geringere Spaltverluste) und sind im allgemeinen bezüglich der maximalen Drehzahlen praktisch nicht eingeschränkt, da funktionsfähige Lagerungen von Turboladern der interessanten Größe Drehzahlen bis 300 000 1/min schon heute serienmäßig abdecken.

Prinzipiell wird der Betriebsbereich eines Strömungsverdichters durch die Pumpgrenze zu den niederen Massendurchsätzen und durch die Stopfgrenze zu den hohen Massendurchsätzen begrenzt.

Kritisch für die Massenstromspanne der Brennstoffzelle bzgl. dem Strömungsverdichter ist der Bereich der niederen Durchsätze, die im allgemeinen zu der erwähnten Pumpproblematik führen. Aus diesem Grunde wurde die Brennstoffzelle mit einer Bypass-Leitung parallel zur Brennstoffzelle mit einem regelbaren Ventil versehen. Hierdurch kann der Verdichtermassenstrom auch bei niedersten Brennstoffzellendurchsätzen um den Umblasemassenstrom, der durch die Ventilöffnung und dem Druckverhältnis über das Ventil bestimmt ist, erhöht werden und auch bei relativ hohen Druckverhältnissen in den stabilen Betriebskennfeldbereichen der beiden Verdichter gehalten werden.

Wenn wir variable Strömungsquerschnitte uni die Turbine ansprechen, so könnten dies Klappen oder Schieber sein, die vor oder auch nach der Turbine plaziert sind und im wesentlichen eine Aufstaufunktion beinhalten. Nachteil ist jedoch die wirkungsgradschädliche Drosselwirkung der an die Aufstaudrücke angepassten Querschnitte. Ausgeschlossen werden sollte auch nicht der Einsatz von Abblaseventilen bei der hier durchgeführten Klassifizierung der betrachteten Varioelemente um und in der Turbine, die sich ebenfalls über einen Aktuator an die elektronische Regelung anschliessen lassen.

Wirklich vorteilhaft wirksam hinsichtlich einer Effizienz und damit bzgl. Energierückgewinn sind jedoch erst die variablen Strömungsquerschnitte innerhalb der Turbine und zwar am besten die im allgemeinen direkt vor dem Turbinenrad angeordneten Vorleitgitter. Deren engste Kanal-Querschnitte werden durch dreh- oder translatorische Bewegungen der Leitschaufeln verändert Hierdurch wird nicht nur die engste Durchströmfläche verändert, sondern auch die Zuströmrichtung zum Turbinenrad, wodurch der Wirkungsgrad der Turbine, bzw. der Energierückgewinn und damit auch der Wirkungsgrad des Gesamtsystems merklich beeinflusst werden kann. Der variablen Turbine kommt im Rahmen der Verfahrensansprüche eine sehr große Bedeutung zu, da damit die gewünschten Prozesseintrittsdrücke der Brennstoffzelle im Verbindung mit den Verdichterstufen genau und wirkungsgradgünstig einregelbar sind.

Da das Austrittsprodukt der Brennstoffzelle Wasserdampf und Luft darstellt, macht es aus energetischer Sicht Sinn den Kondensator nach der Turbine zu platzieren, wie aus dem Anspruch 5 zu entnehmen ist. Die Trennung von Luft und Wasser wird durchgeführt, wobei eine Weiterverwertung des Wassers sich anbietet.

Die Nutzung des Wassers ist für Kühlzwecke von Komponenten, z. B. den Elektromotoren, genauso denkbar wie für die Scheibenwaschanlage. Bei Sonderanwendungen, z. B. bei Fahrzeuge für den Wüsteneinsatz, ließe sich das Wasser auch einer Trinkwasser-Aufbereitungsvorrichtung zuführen. Bei Camping-Fahrzeugen wäre das konditionierte, bzw. unkonditionierte Wasser zum Kochen oder auch für Wasch-, bzw. Toilettenzwecke nutzbar. Unabhängig von der Nutzung des erzeugten Wassers ließe sich das gesamte oder zumindest ein Teil davon in einem Tank abspeichern, bevor über die Weiterverwendung entschieden wird.

Um innerhalb des Kondensators einen vorteilhaften Unterdruck zur Entwässerung zu bewirken, könnte am Kondensatoraustritt der Luftseite in Verbindung mit der Wasserseite ein entsprechender Diffusor Nutzen bringen. Der Erosionsgefahr am Turbinenrad durch Wasserschlag, im besonderen im Radeintrittsbereich, kann durch verschleißfeste Werkstoffe der Räder oder Oberflächenbeschichtungen entgegnet werden. Da die Temperaturschwankungen in der Turbine nicht sonderlich hoch sind, ist der Einsatz von Keramiken als Radwerkstoff oder Beschichtungsmaterial in diesem Zusammenhang von der Rissanfälligkeit der Keramiken völlig unkritisch.

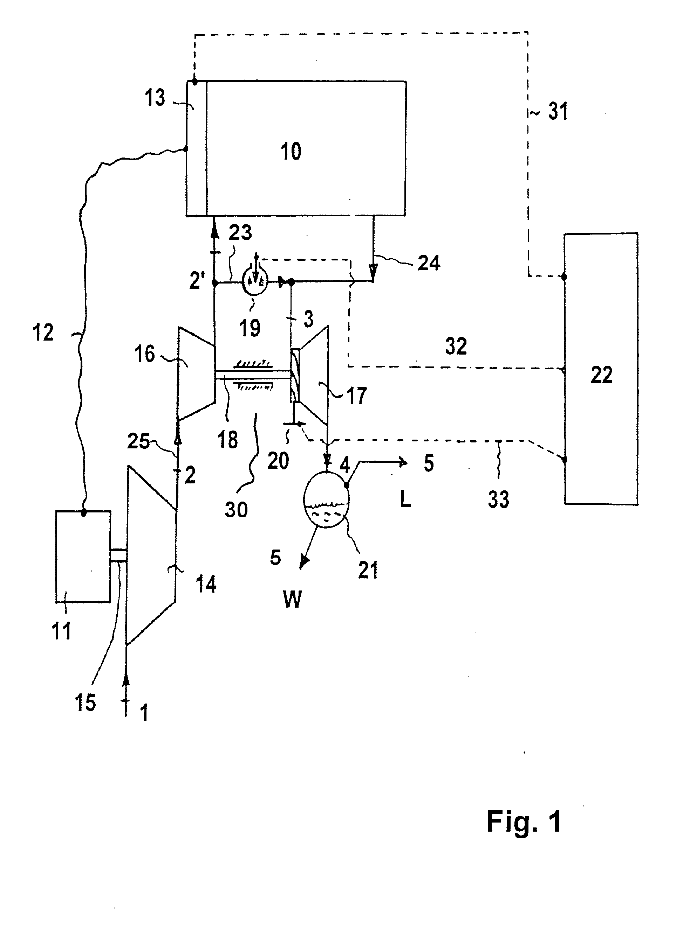

Ein Großteil der Merkmale des Brennstoffzellen-Luftversorgungssystems zur Umsetzung des Verfahrens lässt sich aus der Prinzipschaltungsskizze Fig. 1 entnehmen.

Aus der Umgebung wird gefilterte Luft durch den Niederdruckverdichter (14) mit dem Zustand 1 angesaugt. Das Verdichterrad des Niederdruckverdichters (14) steht über eine Antriebswelle (15) mit dem Elektromotor (11) in Verbindung, der das wesentliche Aggregat darstellt, um Energie über den Niederdruckverdichter in die Luftströmung und damit in das gesamte System der Brennstoffzellen-Luftversorgung einzuspeisen. Die Energiezuführung erfolgt entweder direkt aus der Brennstoffzelle (10) oder aus dem Stromspeicher (13) über die Kabel (12). Der totale Zustandspunkt 2 nach dem Niederdruckverdichter ist praktisch durch diese Einspeise-Energiemenge des Elektromotors geprägt.
Ein Element, das in der Übersichtsskizze nicht eingezeichnet ist, ist ein Zwischenkühler, der auf jeden Fall eingesetzt wird, wenn der Wasserstoffverbrauch hinsichtlich niederer Verbräuche optimiert werden soll. Zum andern kann es eine Notwendigkeit sein, daß die Eintrittstemperatur der Zelle unterhalb eines Wertes bleiben muß, um die mechanische Haltbarkeit der Membran nicht zu gefährden. Die Zwischenkühlung führt zu einer Begünstigung einer reduzierten Leistungsaufnahme des Hochdruckverdichters (16), da die Leistungsaufnahme direkt proportional zu

Nach der Turbine (17) erfährt das Gemisch Luft-Wasserdampf-Wasser den temperaturreduzierten Zustandspunkt 4 vor dem Kondensator (21).

Im Kondensator (21) erfolgt die Trennung der Wasseranteile von der Luft, die dann über eigene Austrittsöffnungen des Kondensators 5L und 5W in das nachfolgende Austrittsrohrsystem der Luftversorgungseinrichtung wegströmen. Im Austrittsrohrsystem können sich Elemente befinden, die für einen Unterdruck' des Kondensators sorgen und für die Weiternutzung des Kondensats zuständig sind.

Der Kernintelligenz zur Nutzung des Brennstoffzellen-Luftsystem steckt im Regler (22), der die drei regelbaren Komponenten: Elektromotor mit den Signalen (31), das Umblaseventil (19) mit den Signalen 32 und ggf. die Varioelernente bzgl der Turbine (17) mit den Signalen (33) im Zusammenspiel optimal führen soll. Wie bei den Verbrennungsmotoren üblich, wird der Regler (22) auch bei der Brennstoffzelle dazu im allgemeinen mit hinterlegten elektronischen Daten versehen, um bei den angefahrenen Betriebspunkten eine optimale Einstellung, bzw. Kombination der betreffenden Aktuatorpositionen zu bewirken.

## Patentansprüche

1. Verfahren zur Regelung einer Vorrichtung zur Luftversorgung von Brennstoffzellen mit Kompressoren, wobei ein Strömungsverdichter (14) niederdruckseitig mit einem Elektromotor (11) verbunden ist, wobei ein weiterer in Reihe nachgeschalteter Hochdruckverdichter (16) der Strömungsmaschinenbauart mit einer Turbine (17) als Freiläufer (30) fest gekoppelt ist, die mit der Austrittsverrohrung (24) der Brennstoffzelle (10) verbunden ist, wobei nach dem Hochdruckverdichter (16) vor der Brennstoffzelle (10) eine Verbindungsleitung (23) zur Austrittsverrohrung (24) der Brennstoffzelle (10) führt, in die ein regelbares Ventil (19) eingebracht ist,
**dadurch gekennzeichnet,**
**daß** der Anfahr-(Startvorgang oder Lastwechselvorgang des Brennstoffzellen-Luftversorgungssystems zumindest teilweise über die elektrische Energiezufuhr aus dem Stromspeicher (13) zum Elektromotor (11) und damit der Leistungszumessung des Niededruckverdichters mittels der Signale (31) erfolgt, und dabei die Einstellungen der Schließ-/Öffnungspositionen des Umblaseventils (19), bzw. Bypass-Massenstroms der Brennstoffzelle, entsprechend der Signale (32) des Reglers (22) durchgeführt werden.

2. Verfahren nach Anspruch 1, wobei im Bereich um die Turbine (17) des Freiläufers (30) oder innerhalb der Turbine (17) variable Elemente bzgl. der Strömungsquerschnitte vorliegen, die über die Betätigungseinrichtung (20) mit einer Regelung koppelbar sind,
**dadurch gekennzeichnet,**
**daß** der variable engste Querschnitt des Start- oder Lastwechselzustandes um oder in der Turbine (17) mittels der Signale (33) des Reglers (22) derart beeinflußt werden, dass die Bereitstellung der notwendigen Prozess-Eintrittsdrücke und Prozess-Eintrittstemperaturen in der Brennstoffzellen-Start-/Lastwechsel-Phase gegeben ist.
